# EUROPÄISCHE PATENTANMELDUNG

(11) **EP 4 513 066 A1**
(43) Veröffentlichungstag der Anmeldung: **26.02.2025**
(21) Anmeldenummer: 23193517.2
(22) Anmeldetag: 25.08.2023
(51) Int. Cl.: F16K 11/085, E03C 1/02, F16K 11/00

(54) **FLUIDVERTEILERVENTIL**

(71) Anmelder: Geberit International AG, 8645 Jona (CH)
(72) Erfinder: Bissig, Georges, 8750 Riedern (CH); Zwicker, Maurus, 8733 Eschenbach (CH)
(74) Vertreter: König Szynka Tilmann von Renesse Patentanwälte Partnerschaft mbB München

(57) **Zusammenfassung**

Die Erfindung betrifft ein Fluidverteilerventil mit einem äußeren Ventilbauteil (12) und einem in dem äußeren Ventilbauteil angeordneten und relativ zu dem äußeren Ventilbauteil um eine Achse drehbaren Ventilkörper (18), wobei eine Außenmantelfläche des Ventilkörpers und eine Innenmantelfläche des äußeren Ventilbauteils Durchgangsöffnungen (20) aufweisen, an welche Durchgangsöffnungen Fluidleitungen anschließen und welche Durchgangsöffnungen durch Drehen des Ventilkörpers relativ zu dem äußeren Ventilbauteil in und außer Überdeckung gebracht werden können, gekennzeichnet durch einen Dichtungseinsatz (19) zwischen dem Ventilkörper (18) und dem äußeren Ventilbauteil (12) zum Abdichten von Durchgangsöffnungen (20), welcher Dichtungseinsatz drehfest mit dem Ventilkörper oder mit dem äußeren Ventilbauteil verbunden ist und bei dem Drehen relativ zu dem jeweils anderen, also dem äußeren Ventilbauteil bzw. dem Ventilkörper, mitgedreht wird und welcher Dichtungseinsatz mindestens eine der Durchgangsöffnungen vollständig umläuft.

## Beschreibung

Die vorliegende Erfindung betrifft ein Fluidverteilerventil, mit dem ein Fluid, insbesondere Wasser, zwischen angeschlossenen Leitungen verteilt werden kann. Konkret geht es um ein Drehventil mit einem drehbaren Ventilkörper in einem äußeren Ventilbauteil.

Fluidverteilerventile sind bekannt und umfangreich in Gebrauch. Z. B. werden sie in Leitungssystemen für Wasser eingesetzt, insbesondere in WC-Duscheinrichtungen. Sie erlauben je nach Anwendungsfall das Schalten von zugeführtem Wasser zwischen einer Mehrzahl Leitungen bzw. das Sperren solcher Leitungen. Im Prinzip kann auch (sozusagen mit umgekehrter Strömungsrichtung) zugeführtes Wasser aus einer Mehrzahl Leitungen wahlweise auf zumindest eine Wasser abführende Leitung geschaltet werden. Es gibt jedenfalls insgesamt mehr als zwei Leitungsanschlüsse und es handelt sich somit nicht um ein einfaches Ein/Aus-Schaltventil zum Sperren oder Öffnen des Durchgangs in einer einzelnen Leitung.

Bei einer WC-Duscheinrichtung geht es z. B. darum, von einer Wasserversorgung kommendes und typischerweise bereits erwärmtes Wasser zumindest einer aus einer Mehrzahl Duschdüsen der Duscheinrichtung und/oder zumindest einer Reinigungsvorrichtung für einen Duscharm mit diesen Duschdüsen und/oder für eine Aufnahmekammer für diesen Duscharm zuzuführen. Die Mehrzahl Duschdüsen können sich hinsichtlich Abstrahlrichtung und Zielort unterscheiden (sogenannte Analdüsen, Ladydüsen etc.) und viele WC-Duscheinrichtungen weisen eigene Reinigungsvorrichtungen auf, die z. B. den Duscharm oder Teile davon oder eine Aufnahmekammer dafür mit gewärmtem Wasser spülen können.

Die Anmelderin hat solche Fluidverteilerventile für WC-Duscheinrichtungen seit vielen Jahren produziert und verkauft. Dabei handelt sich insbesondere um Drehventile mit einem drehbaren Ventilkörper in einem Gehäuse, das im Folgenden der Allgemeinheit wegen als äußeres Ventilbauteil bezeichnet wird. Die Funktion des Fluidverteilerventils erfolgt darüber, dass je nach Drehposition Durchgangsöffnungen einer Außenmantelfläche des Ventilkörpers und Durchgangsöffnungen einer Innenmantelfläche des äußeren Ventilbauteils in Überdeckung und aus der Überdeckung gebracht werden, womit ein Wasserdurchfluss ermöglicht bzw. unterbunden wird. Dazu schließen an die Durchgangsöffnungen Fluidleitungen, also Wasserleitungen, an. Die erwähnten Mantelflächen sind bei dem konventionellen Typ ungefähr zylindrisch, wobei die Drehachse mit der Zylinderachse übereinstimmt.

Der Erfindung liegt die Aufgabe zugrunde, ein Fluidverteilerventil des beschriebenen Typs weiter zu verbessern.

Hierzu richtet sich die Erfindung auf ein Fluidverteilerventil nach Anspruch 1 und außerdem eine damit ausgestattete WC-Duscheinrichtung sowie die Verwendung des Fluidverteilerventils für eine solche Duscheinrichtung.

Die Erfinder haben festgestellt, dass bei bestimmten Anwendungsfällen von Fluidverteilerventilen, insbesondere bei Flüssigkeiten und insbesondere bei Wasser, Probleme mit Feststoffen bzw. Partikeln zwischen der Außenmantelfläche des Ventilkörpers und der Innenmantelfläche des äußeren Ventilbauteils auftreten können. Dabei kann es sich bspw. um Restverunreinigungen von Leitungswasser handeln, die z. B. Filtersiebe durchdrungen haben, oder um Kalkausscheidungen o. ä. Aufgrund solcher Feststoffpartikel stellt es sich als schwierig heraus, mit sehr präzisen Passungen zwischen den beiden Mantelflächen zu arbeiten; vielmehr wird ein gewisses Maß von Toleranz benötigt.

Eine solche Toleranz kann außerdem herstellungsbedingt notwendig oder jedenfalls vorteilhaft sein. Z. B. können Ventilbauteile in ökonomischer und praxistauglicher Form durch Kunststoffspritzguss hergestellt werden, was zum einen gewisse Toleranzen bedingt und zum anderen mit Rücksicht auf die Entformung geometrische Einschränkungen mit sich bringt.

Schließlich sind präzise Passungen, selbst wenn sie technisch gut machbar sind, jedenfalls mit Kosten verbunden.

Andererseits hat sich herausgestellt, dass das in diesem Sinn vorhandene Spiel zu einer grundsätzlichen Undichtigkeit eines Fluidverteilerventils des beschriebenen Typs und zu spürbaren Nachteilen führt. Erstens betrifft das den unnötigen Wasserverbrauch an sich, zweitens z. B. bei WC-Duscheinrichtungen meistens auch einen Energieverlust wegen der Heizung des Wassers und drittens kann die Leckage des Fluidverteilerventils mindestens von Benutzern als störend empfunden werden, etwa wenn im Bereich der Duscharmdurchführung in eine WC-Schüssel oder anderswo ein Rinnsal wegen Leckagewasser läuft.

In diesem Sinn haben verschiedene Versuche eine deutliche Verbesserung durch Einführung eines Dichtungseinsatzes zwischen den Mantelflächen ergeben. Dabei handelt es sich um einen Einsatzkörper, der eine zusätzliche Materiallage zwischen den Mantelflächen (nicht zwingend überall dazwischen) zu Dichtungszwecken einführt. Im Gegensatz dazu dichteten die Mantelflächen in dem beschriebenen Stand der Technik durch Anlage aneinander. Der Ventilkörper verbessert die Dichtigkeit und verringert im Vergleich zu einer hinsichtlich Dichtigkeit optimierten Fassung der Mantelflächen die Empfindlichkeit gegen Feststoffpartikel. Außerdem ist der Dichtungseinsatz frei von Materialeinschränkungen, wie sie für den Ventilkörper und das äußere Ventilbauteil gelten, und kann insoweit auch frei von solchen Einschränkungen optimiert werden. Bspw. kommt im Rahmen der vorliegenden Erfindung und des Ausführungsbeispiels ein Silikon-Dichtungseinsatz bevorzugt in Betracht.

Der Dichtungseinsatz ist erfindungsgemäß drehfest mit dem Ventilkörper oder dem äußeren Ventilbauteil verbunden, verhält sich also bei den Relativdrehungen zwischen diesen beiden Bauteilen wie eines davon und verdreht sich dementsprechend relativ zu dem anderen.

Ferner umläuft der Dichtungseinsatz zumindest eine der Durchgangsöffnungen in den Mantelflächen vollständig, bildet also eine Abdichtung dieser Öffnung gegen die daran angrenzenden Teile der entsprechenden Mantelfläche der Durchgangsöffnung und der dazu komplementären anderen Mantelfläche. Bevorzugt gilt dies für eine Mehrzahl und besonders bevorzugterweise für alle Durchgangsöffnungen in den Mantelflächen.

Bei einer bevorzugten Ausführungsform gibt es mindestens zwei in Richtung der (Dreh-)Achse gegeneinander versetzte Durchgangsöffnungen, wobei der axiale Versatz axial nicht zwingend einen Versatz in Umfangsrichtung ausschließt. Vor allem bei einer größeren Zahl von angeschlossenen Leitungen kann ein solcher axialer Versatz zu einer vorteilhaften Bauform führen und erfindungsgemäß ist vorgesehen, dass der Dichtungseinsatz dann zumindest die zwei axial versetzten Durchgangsöffnungen jeweils vollständig umläuft.

Neben den Durchgangsöffnungen in Mantelflächen liegt eine bevorzugte Durchgangsöffnung an einer Stirnseite des Ventilkörpers, also an einem von der Drehachse durchsetzten Ende und damit nicht ebenfalls in einer Mantelfläche. Eine mit dieser Durchgangsöffnung kommunizierende Fluidleitung ist dementsprechend in dem äußeren Ventilbauteil in diesem Sinn (bezogen auf den Ventilkörper) stirnseitig vorgesehen. Der Ventilkörper wiederum weist eine von dieser Durchgangsöffnung ausgehende innere Fluidleitung auf, die zumindest auch axial verläuft. Z. B. kann der Ventilkörper in diesem Sinn weitgehend hohl und einseitig (an dem Stirnende) offen ausgeführt sein, vgl. das Ausführungsbeispiel.

Wie vorhin schon angesprochen können Durchgangsöffnungen in den Mantelflächen axial beabstandet sein. Generell kann eine in der Richtung der Achse vergleichsweise ausgedehnte Bauform vorteilhaft sein, insbesondere um eine größere Zahl von Leitungsanschlüsse und Durchgangsöffnungen unterbringen zu können. Vorzugsweise bezieht sich der erfindungsgemäße Dichtungseinsatz dann auf eine Mehrzahl und besonders bevorzugter Weise alle Durchgangsöffnungen entlang einer solchen langgestreckten Mantelfläche. In diesem Sinn ist die Länge des Dichtungseinsatzes in der Richtung der Achse vorzugweise größer als (der Durchmesser) senkrecht dazu.

Der Dichtungseinsatz ist, wie schon erwähnt, um abzudichtende Durchgangsöffnungen herum geschlossen ausgeführt. Das bedingt nicht zwingend, dass er in der Umfangsrichtung um die Achse herum ebenfalls geschlossen ist, also eine rohrähnliche Form hat. Dies ist aber eine einfache und bevorzugte Bauform. Je nach Lage der Durchgangsöffnungen könnte der Dichtungseinsatz aber auch z. B. U-förmig im Querschnittsprofil (oder etwas stärker geschlossen als ein U) sein.

Wie erwähnt dreht sich der Dichtungseinsatz bei den Bewegungen zwischen Ventilkörper und äußerem Ventilbauteil mit einem der beiden mit. Vorteilhafterweise wird diese Drehsicherung durch ein Formschlusselement des Ventilkörpers erzielt, das vorteilhafterweise mit einem komplementären Formschlusselement an dem Ventilkörper bzw. äußeren Ventilbauteil zusammenwirkt. Beim Ausführungsbeispiel handelt es sich exemplarisch um eine Kombination aus zwei achsparallel langgestreckten Vorsprüngen seitens des äußeren Ventilbauteils und zwei Aufnahmen dafür, also um eine Rille/Rippen-Kombination.

Vorzugsweise weist der Dichtungseinsatz keine konstante Materialstärke (bei zylindrischer Geometrie in radialer Richtung) auf, sondern zumindest eine Verdickung. Diese Verdickung umläuft eine der Durchgangsöffnungen in einer Mantelfläche vollständig und zwar vorzugsweise möglichst nah an dieser Öffnung. Insbesondere kann also der Rand des Dichtungseinsatzes um die Durchgangsöffnung herum verdickt sein. Damit wird lokal eine dichtere Passung und/oder ein erhöhter Anpressdruck erreicht und damit eine lokale Abdichtung geschaffen.

Es kann sich um eine Verbesserung einer ohnehin gegebenen Abdichtung handeln, aber auch um die dichtenden Bereiche an sich. In diesem Sinn sind vorzugsweise auch die anderen Durchgangsöffnungen im Bereich des Dichtungseinsatzes von einer solchen Verdickung umgeben.

Wenn es sich dabei um die dichtenden Bereiche an sich handelt und der übrige Dichtungseinsatz wenig oder nichts zur Abdichtung beiträgt, hat dieser übrige Bereich dennoch eine Trägerfunktion und ermöglicht auch eine einfache und komfortable Handhabung, insbesondere einen günstigen Einbau oder Austausch des Dichtungseinsatzes. Beim Ausführungsbeispiel erkennt man etwa, dass die insgesamt ungefähr hohlzylindrische Geometrie des Dichtungseinsatzes durch einfaches Einschieben in das äußere Ventilbauteil die Verdickungen quasi selbsttätig jeweils an die richtigen Stellen bringt und dort hält.

Eine Betonung der Abdichtung in der direkten Umgebung der Durchgangsöffnungen oder eine Konzentration darauf kann auch den Vorteil haben, eine übermäßige Reibung zwischen dem Dichtungseinsatz und dem sich relativ dazu drehenden anderen Bauteil (Ventilkörper oder äußerer Ventilbauteil) zu verhindern oder eine solche Reibung jedenfalls zu reduzieren.

Das im Rahmen der Anmeldung bevorzugte Material für den Dichtungseinsatz wurde bereits erwähnt, nämlich Silikon. Besonders bevorzugterweise hat dieses eine Shore A-Härte zwischen 30 und 90, wobei bevorzugte Untergrenzen bei 40 und 50 und bevorzugte Obergrenzen bei 80 und 70 liegen.

Das äußere Ventilbauteil oder der Ventilkörper können im Wesentlichen oder ganz aus Kunststoff aufgebaut sein (vorzugsweise beide), insbesondere Spritzgussteile sein. Natürlich können Metallbestandteile o. ä. integriert sein. Vorzugsweise sind jedenfalls die hier betrachteten Mantelflächen aus Kunststoff. Einerseits sind Kunststoff- und insbesondere Spritzgussteile ökonomisch und praxistauglich, andererseits können mit dem erfindungsgemäßen Dichtungseinsatz die z. B. im Vergleich zu präzisionsgefertigten Metallteilen größeren Maßtoleranzen hinsichtlich ihrer Auswirkungen weitgehend oder ganz kompensiert werden.

Das Fluidverteilerventil ist bevorzugt motorisch angetrieben. Die Krafteinleitung, also Kopplung, zwischen Motor und Ventilkörper erfolgt im Hinblick auf den Ventilkörper vorzugsweise stirnseitig, und zwar vorzugsweise an der zu der hinsichtlich der Durchgangsöffnung bereits erwähnten Stirnseite entgegengesetzten Stirnseite. Bspw. kann der Ventilkörper hier ein stirnseitiges Formschlusselement für einen Formschluss mit einem komplementären Element auf der Motorabtriebseite aufweisen.

Schließlich kann der Ventilkörper zur Stabilisierung an einer bestimmten Stelle ohne Zwischenschaltung des Dichtungseinsatzes in dem äußeren Ventilbauteil gelagert sein. Dies erfolgt vorzugsweise mit Abstand von einem Betätigungsangriff für die Drehbewegung, insbesondere der gerade erwähnten Ankopplung des Motorantriebs, besonders bevorzugterweise an einem dazu entgegengesetzten Ende. Dementsprechend kann diese Lagerung an dem hinsichtlich der Durchgangsöffnung bereits behandelten stirnseitigen Ende des Ventilkörpers gegeben sein, wie das Ausführungsbeispiel veranschaulicht.

Das erfindungsgemäße Fluidverteilerventil bildet einen hinsichtlich technischer Leistungsfähigkeit und Ökonomie vorteilhaften Bestandteil insbesondere für eine WC-Duscheinrichtung. Dies kann einerseits ein (sog. integriertes) Dusch-WC sein oder andererseits eine mit einem WC kombinierbare Duscheinrichtung, also z. B. ein sogenanntes Aufsatzgerät. In diesem Sinn richtet sich die Erfindung auch auf eine solche WC-Duscheinrichtung.

Sie richtet sich daneben auch auf die vorteilhafte Verwendung des Fluidverteilerventils für eine solche WC-Duscheinrichtungen. Dies bedeutet, dass das Fluidverteilerventil in solchen WC-Duscheinrichtungen einen besonders sinnvollen Einsatzzweck findet und damit der Einbau darin und die Funktion des Fluidverteilerventils in der Duscheinrichtung dessen Vorteile auch auf die Duscheinrichtung erstrecken. Mit der Verwendung ist hier nicht zwingend auch die Benutzung des Fluidverteilerventils im Sinn einer Benutzung der WC-Duscheinrichtung gemeint, also das Schalten und Verteilen von Wasserströmungen, sondern schon der Einsatzzweck an sich.

Im Folgenden wird ein erfindungsgemäßes Ausführungsbeispiel zur Veranschaulichung erläutert, dass in den Figuren dargestellt ist.

Im Einzelnen zeigt
- Figur 1: eine perspektivische Ansicht eines Teils einer erfindungsgemäßen Duscheinrichtung mit einem Duscharm, dessen Antrieb und einem Fluidverteilerventil;
- Figur 2: eine perspektivische Gesamtansicht des Fluidverteilerventils aus Figur 1 ;
- Figur 3: eine Darstellung des Fluidverteilerventil aus Figur 2 in anderer Perspektive und mit entlang einer axialen Richtung auseinandergezogenen Bestandteilen;
- Figur 4: eine Ansicht eines Schnitts entlang der axialen Richtung durch das Fluidverteilerventil;
- Figur 5: eine Ausschnittsvergrößerung zur Figur 4;
- Figur 6: eine Ausschnittsvergrößerung zur Figur 5;
- Figur 7: eine Ansicht eines Schnitts quer zu der axialen Richtung durch das Fluidverteilerventil und
- Figur 8: einen Dichtungseinsatz des Fluidverteilerventils in perspektivischer Ansicht.

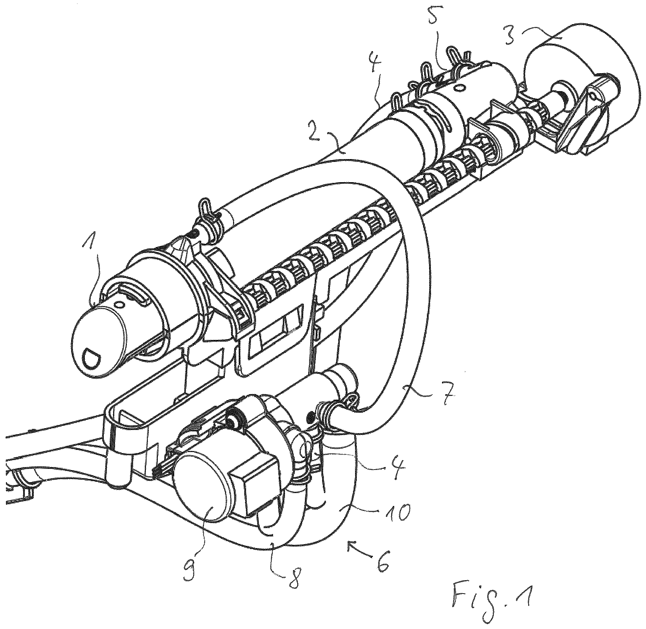

Figur 1 zeigt einen Teil einer erfindungsgemäßen Duscheinrichtung zur Veranschaulichung einer typischen Verwendung eines erfindungsgemäßen Fluidverteilerventils. Man erkennt einen nach vorne links ausfahrbaren Duscharm 1 in einem Gehäuse 2 sowie einen Antriebsmotor 3 für die Ausfahrbewegung des Duscharms 1, welcher über ein Schneckengetriebe mit dem Duscharm 1 gekoppelt ist. Der Duscharm 1 ist in seinem hinteren Bereich über vier Wasserleitungen, von denen zwei Wasserleitungen 4 und 5 gezeigt sind, mit Duschwasser versorgt, welches drei verschiedenen Duschdüsen zugeführt wird.

Drei dieser Wasserleitungen gehen von einem im Vordergrund sichtbaren Fluidverteilerventil 6 nach unten ab. Ferner geht von dem Fluidverteilerventil 6 eine besser erkennbare Leitung 7 nach rechts vorne ab, die zu einer vorderen Position des Gehäuses 2 des Duscharms 1 führt und dort eine Wascheinrichtung für den Duscharm versorgt. Die bereits erwähnte Wasserleitung 4 versorgt eine andere (interne) Reinigungseinrichtung des Duscharms 1. Eine weitere Leitung 8 geht von dem Fluidverteilerventil 6 ab und dient der Wasserzirkulation in bestimmten Betriebszuständen, insbesondere beim Entkalken. Ferner sieht man im vorderen Bereich einen Stellmotor 9 des Fluidverteilerventils. Das Verteilerventil 6 wird durch eine Wasserzulaufleitung 10 versorgt, die als Leitung ebenfalls erkennbar ist, wobei der Anschluss selbst durch den Anschluss der Wasserleitung 7 abgedeckt ist.

Insgesamt dient das Verteilerventil 6 also zur Verteilung des als Betriebsmedium dienenden Wassers in der Duscheinrichtung und ist dazu in der Nähe des Duscharms montiert. Weitere mit dem Verteilerventil 6 in Verbindung stehende Einrichtungen wie ein Heißwasserbehälter, ein Durchlauferhitzer, ein Eingangswasseranschluss mit Freifallstrecke für die Hygienetrennung vom Wasserleitungsnetz, eine Wasserpumpe etc. sind nicht gezeigt, aber dem Fachmann geläufig. Ferner führt eine (Bezugsziffer 5) der vier erwähnten Wasserleitungen direkt von einer Zusatzpumpe zum Duscharm 1 und versorgt eine sogenannte "Boost-Düse".

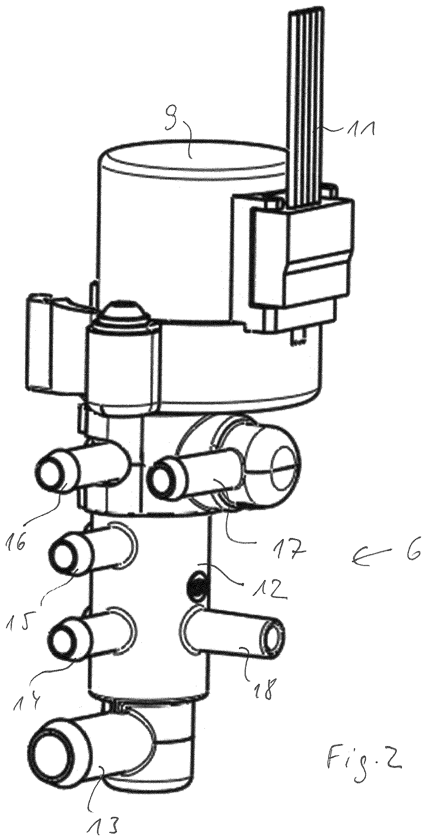

Figur 2 zeigt das Verteilerventil 6 aus Figur 1. Man erkennt oben den bereits erwähnten Stellmotor 9 mit elektrischen Anschlussleitungen 11 rechts vorne daran und darunter ein ganz ungefähr zylindrisches äußeres Ventilbauteil 12, nämlich ein Ventilgehäuse. In einem unteren Bereich gibt es einen Anschlussstutzen 13 für die bereits erwähnte Wasserzuleitung 10, darüber einen etwas kleineren Anschlussstutzen 14 für die Duschwasserleitung, darüber einen weiteren Anschlussstutzen 15 für die Leitung 4 für die interne Duscharmreinigung, darüber wiederum einen weiteren Anschlussstutzen 16 für eine weitere Duschwasserleitung (in diesem Fall zur Versorgung einer sog. Analdüse gegenüber der von dem Anschlussstutzen 14 versorgten sogenannten Ladydüse). Rechts neben dem Anschlussstutzen 16 gibt es einen weiteren Anschlussstutzen 17 für die ebenfalls in Figur 1 bereits gezeigte Zirkulationsleitung 8 und darunter schließlich einen Anschlussstutzen 18 für die Leitung 7 aus Figur 1.

Man erkennt, dass die Anschlussstutzen entlang der vertikalen Achse der angenäherten Zylinderform des äußeren Ventilkörpers 12 versetzt sind und zum Teil außerdem entlang des Umfangs der Zylinderform versetzt.

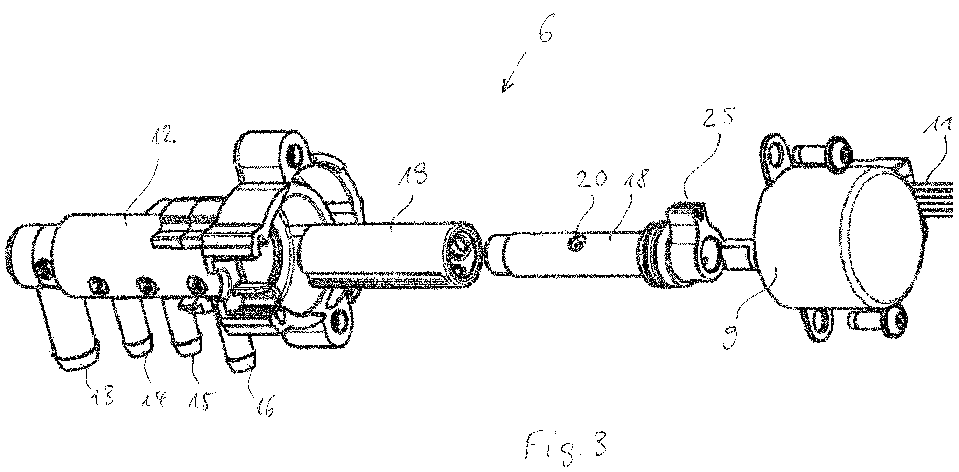

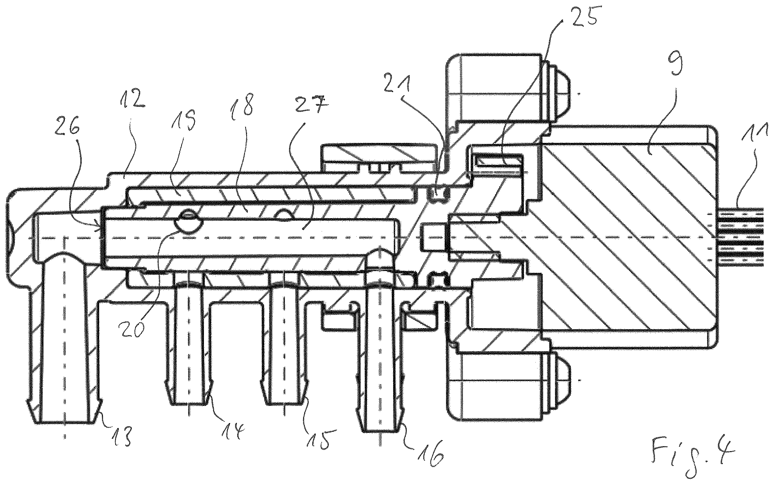

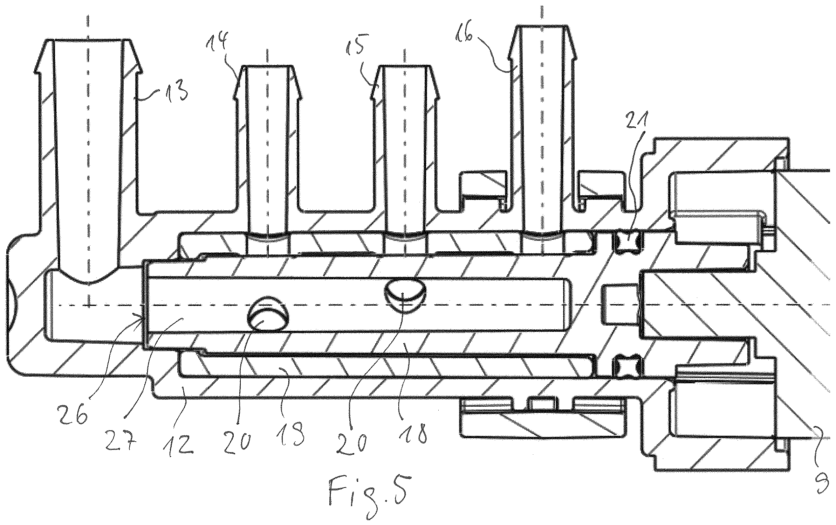

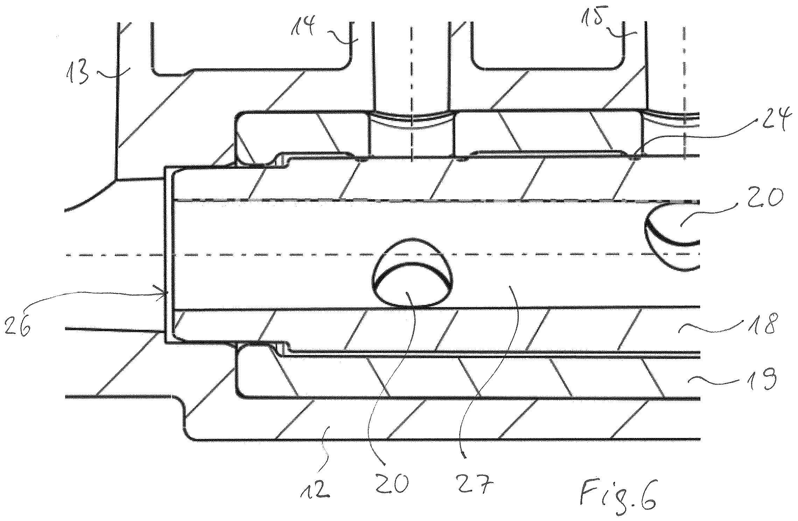

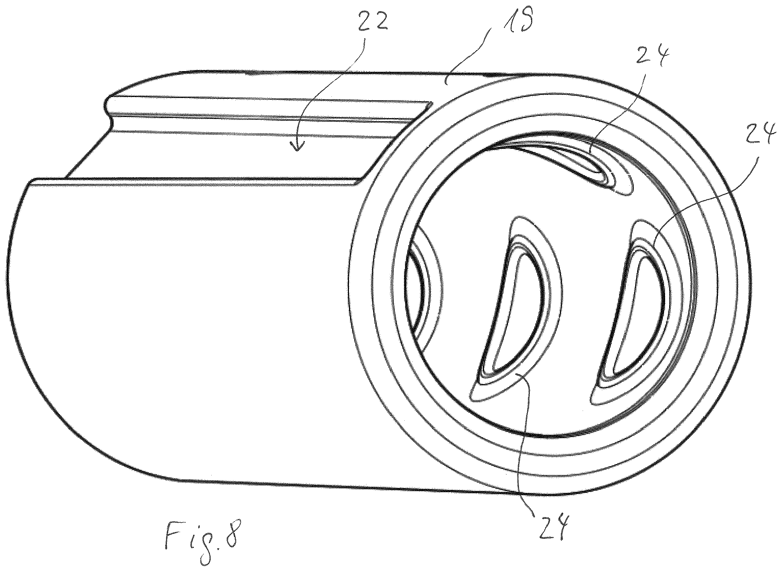

In den Figuren 3 und 4 erkennt man den inneren Aufbau des Verteilerventils 6 besser. Insbesondere zeigt Figur 3 in dem äußeren Ventilbauteil 12 im zusammengebauten Zustand eingesetzte Elemente in einem herausgezogenen Zustand. Das gleiche gilt für den rechts dargestellten Stellmotor 9. Konkret betrifft dies einen Ventilkörper 18 und einen (im zusammengesetzten Zustand) diesen umgreifenden und in dem äußeren Ventilbauteil 12 angeordneten Dichtungseinsatz 19. Dieser ist in Figur 8 vergrößert und für sich dargestellt, wobei die Figuren 5-7 die Figuren 3 und 4 mit weiteren Vergrößerungen bzw. einer abweichenden Schnittebene ergänzen. In Figur 3 erkennt man, dass der Motor 9 an seiner nach links weisenden Abtriebswelle einen Flachzapfen zum Eingriff in das innere Ventilbauteil, also den Ventilkörper 18 aufweist und darüber diesen verdrehen und positionieren kann.

Der Ventilkörper 18 wiederum ist, wie die Figuren 4, 5 und 6 zeigen, von seinem in Figur 3 linken Ende aus über den größten Teil seiner Längserstreckung konzentrisch ausgehöhlt und weist von dieser konzentrischen (zylindrischen) Innenleitung 27 ausgehende Durchgangsöffnungen 20 zu seiner Außenmantelfläche auf, von denen eine in Figur 3 gezeigt. Mit solchen Durchgangsöffnungen 20 kann die innere Leitung in dem Ventilkörper 18 mit den verschiedenen Anschlussstutzen kommunizieren, die anhand Figur 2 erläutert worden sind und zu jeweiligen Durchgangsöffnungen in dem äußeren Ventilbauteil 12 führen, vgl. die Schnittdarstellungen 4 bis 7. Dabei sorgt eine Drehpositionierung des Ventilkörpers 18 wahlweise für ein Verschließen einer solchen Durchgangsöffnung 20 oder ihren Anschluss an einen Anschlussstutzen, im Fall der Anschlussstutzen 14 und 18 einerseits sowie 16 und 17 andererseits für ein wahlweisen Anschluss an einen von zwei auf der gleichen Position entlang der Achse liegenden Anschlussstutzen.

Andererseits ist die erwähnte zylindrische Innenleitung 27 in dem inneren Ventilbaukörper 18 gemäß den Figuren 4 und 5 an ihrer stirnseitigen Durchgangsöffnung 26 an den Zulauf-Anschlussstutzen 13 angeschlossen, von dem aus das zu verteilende Wasser einströmt.

Der äußere Ventilbaukörper 12 und der Ventilkörper 18 sind jeweils Spritzgussbauteile aus Kunststoff, während der Dichtungseinsatz 19 ein Silikonkörper mit einer Shore-A-Härte von 60 ist. Der Dichtungseinsatz 19 kann damit die bei Spritzgussteilen (12 und 18) im Vergleich zu Metallbauteilen etwas größeren Fertigungstoleranzen ausgleichen.

Die Figuren 4-6 zeigen, dass ein zu dem Stellmotor 3 entgegengesetztes Ende des Ventilkörpers 18 ohne Zwischenschaltung des Dichtungseinsatzes 19 direkt in Kontakt steht mit einem radial daran angepassten Abschnitt der Innenmantelfläche des äußeren Ventilbaukörpers 12. Es handelt sich hier um eine Zentrierung und Lagerung zur Aufnahme von Kräften zwischen den beiden Ventilbaukörpern 12 und 18. Eine weitere Lagerung sieht man in den Figuren 4-6 an dem zu dem Stellmotor 9 benachbarten Ende des Ventilkörpers 18, nämlich rechts von dem rechten Ende des Dichtungseinsatzes 19. Auch hier gibt es also eine Lagerung. In die letztgenannte Lagerung ist ein Dichtungsring 21 mit ungefähr X-förmigem Schnurquerschnitt (aus NBR mit Shore-A-Härte von 70) eingesetzt, um das Verteilerventil insgesamt nach rechts abzudichten.

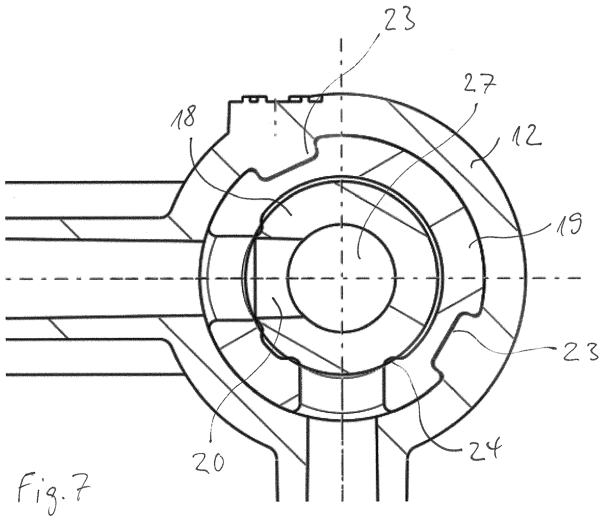

Wie vor allem die Figuren 7 und 8 zeigen, weist der Dichtungseinsatz 19 auf seiner Innenmantelfläche jeweils um die bereits erwähnten Durchgangsöffnungen (wie 20 in Figur 3) herum vollständig umlaufende Verdickungen 24 auf.

Diese Verdickungen 24 bedeuten eine Konzentration des Anpressdrucks und damit auch der Dichtfunktion des Dichtungseinsatzes 19. Wegen ihrer asymmetrischen Anordnung (vgl. Figur 8 und die Anordnung der Anschlussstutzen in Figur 2) ist die zentrierende Lagerung an dem (in Bezug auf den Stellmotor 9) distalen Ende des Dichtungseinsatzes 19 besonders wichtig. Die beschriebenen Verdickungen 24 sorgen insbesondere dafür, nicht aus Gründen der Dichtigkeit einen zu großen Anpressdruck zwischen dem Dichtungseinsatz 19 insgesamt und den Ventilbaukörpern 18 und auch 12 verwenden zu müssen. Damit sind die durch den Stellmotor 3 aufzubringenden Drehmomente nicht zu groß. Grundsätzlich kann die Dichtungsfunktion ganz oder im Wesentlichen auf diese Verdickungen 24 konzentriert sein, was man in Figur 7 an dem schmalen Spalt zwischen der Außenmantelfläche des Ventilkörpers 18 und der Innenmantelfläche des Dichtungseinsatzes 19 (außerhalb der Verdickungen 24) erkennt.

Figur 7 und Figur 8 zeigen außerdem zwei parallel zur Drehachse verlaufende rillenartige Aufnahmen 22 in der Außenmantelfläche des Dichtungseinsatzes 19 (in Figur 8 nur eine sichtbar) und zwei jeweils damit korrespondierende nach innen vorspringende Rippen 23 (nur in Figur 7) an der Innenwandfläche des äußeren Ventilbaukörpers 12. Die Aufnahme 22 gem. Figur 8 (und Figur 3) ist zu dem (relativ zu dem Stellmotor 3) distalen Ende des Dichtungseinsatzes 19 offen, sodass dieser im Zusammenbau entsprechend Figur 3 entlang der Achsrichtung eingesteckt werden kann. Durch den Formschluss zwischen der Rille 22 und der Rippe 23 ist der Dichtungseinsatz 19 in dem äußeren Ventilbaukörper 12 dreharretiert.

In Figur 3 erkennt man an dem zu dem Stellmotor 3 proximalen Ende des Ventilkörpers 18 einen Vorsprung 25. Dabei handelt es sich um einen Träger mit einem darin eingesetzten Magneten. Dementsprechend kann ein Hall-Sensor beim Durchlaufen dieses Vorsprungs 25 während einer von dem Motor 9 angetriebenen Drehung den Drehwinkel verifizieren und damit für die Steuerung des Motors 9 ein Referenzsignal erzeugen.

## Patentansprüche

1. Fluidverteilerventil (6) mit
einem äußeren Ventilbauteil (12) und
einem in dem äußeren Ventilbauteil (12) angeordneten und relativ zu dem äu-ßeren Ventilbauteil (12) um eine Achse drehbaren Ventilkörper (18),
wobei eine Außenmantelfläche des Ventilkörpers (18) und eine Innenmantelfläche des äußeren Ventilbauteils (12) Durchgangsöffnungen (20) aufweisen, an welche Durchgangsöffnungen (20) Fluidleitungen (4, 5, 7, 8, 10) anschlie-ßen und
welche Durchgangsöffnungen (20) durch Drehen des Ventilkörpers (18) relativ zu dem äußeren Ventilbauteil (12) in und außer Überdeckung gebracht werden können,
**gekennzeichnet durch** einen Dichtungseinsatz (19) zwischen dem Ventilkörper (18) und dem äußeren Ventilbauteil (12) zum Abdichten von Durchgangsöffnungen (20),
welcher Dichtungseinsatz (19) drehfest mit dem Ventilkörper (18) oder mit dem äußeren Ventilbauteil (12) verbunden ist und bei dem Drehen relativ zu dem jeweils anderen, also dem äußeren Ventilbauteil (12) bzw. dem Ventilkörper (18), mitgedreht wird und
welcher Dichtungseinsatz (19) mindestens eine der Durchgangsöffnungen (20) vollständig umläuft.

2. Fluidverteilerventil (6) nach Anspruch 1, bei dem mindestens zwei der Durchgangsöffnungen (20) entlang der Achse gegeneinander versetzt liegen und der Dichtungseinsatz (19) beide diese Durchgangsöffnungen (20) jeweils vollständig umläuft.

3. Fluidverteilerventil (6) nach Anspruch 1 oder 2, bei dem eine Fluidleitung in dem äußeren Ventilbauteil (12) stirnseitig an den Ventilkörper (18) angrenzt und der Ventilkörper (18) eine mit dieser Fluidleitung kommunizierende Durchgangsöffnung (26) an dieser Stirnseite sowie eine sich an die Durchgangsöffnung anschließende innere Fluidleitung (27) aufweist.

4. Fluidverteilerventil (6) nach einem der vorstehenden Ansprüche, bei dem eine Länge des Dichtungseinsatzes in der Richtung der Achse größer als senkrecht dazu ist.

5. Fluidverteilerventil (6) nach einem der vorstehenden Ansprüche, bei dem der Dichtungseinsatz in einer Umfangsrichtung um die Achse herum geschlossen ist.

6. Fluidverteilerventil (6) nach einem der vorstehenden Ansprüche, bei dem der Dichtungseinsatz ein Formschlusselement (22) zur Drehsicherung gegenüber dem Ventilkörper (18) bzw. dem äußeren Ventilbauteil (12) aufweist.

7. Fluidverteilerventil (6) nach einem der vorstehenden Ansprüche, bei dem der Dichtungseinsatz um zumindest eine der Durchgangsöffnungen (20) in einer der Mantelflächen herum eine die Durchgangsöffnung (20) vollständig umlaufende Verdickung (24) aufweist.

8. Fluidverteilerventil (6) nach einem der vorstehenden Ansprüche, bei dem der Dichtungseinsatz aus Silikon besteht, vorzugsweise mit einer Shore A-Härte zwischen 40 und 80.

9. Fluidverteilerventil (6) nach einem der vorstehenden Ansprüche, bei dem das äußere Ventilbauteil (12) und/oder der Ventilkörper (18) aus Kunststoff aufgebaut sind, insbesondere Spritzgussteile sind.

10. Fluidverteilerventil (6) nach einem der vorstehenden Ansprüche mit einem Motor (9) zum Antreiben der Drehbewegung, welcher Motor (9) vorzugsweise stirnseitig mit dem Ventilkörper (18) gekoppelt ist.

11. Fluidverteilerventil (6) nach einem der vorstehenden Ansprüche, bei dem der Ventilkörper (18) an einer von einem Betätigungsangriff für die Drehbewegung beabstandeten Stelle, vorzugsweise an einem dazu entgegengesetzten Ende, ohne Zwischenschaltung des Dichtungseinsatzes (19) in dem äußeren Ventilbauteil (12) gelagert ist.

12. WC-Duscheinrichtung, nämlich Dusch-WC oder mit einem WC kombinierbare Duscheinrichtung für das WC, mit einem Fluidverteilerventil (6) nach einem der vorstehenden Ansprüche zum Verteilen von Wasser.

13. Verwendung eines Fluidverteilerventils (6) nach einem der Ansprüche 1-11 für eine WC-Duscheinrichtung nach Anspruch 12.

## Geänderte Patentansprüche

### Geänderte Patentansprüche gemäss Regel 137(2) EPÜ.

1. WC-Duscheinrichtung, nämlich Dusch-WC oder mit einem WC kombinierbare Duscheinrichtung für das WC, welche aufweist ein Fluidverteilerventil (6) zum Verteilen von Wasser mit
einem äußeren Ventilbauteil (12) und
einem in dem äußeren Ventilbauteil (12) angeordneten und relativ zu dem äu-ßeren Ventilbauteil (12) um eine Achse drehbaren Ventilkörper (18),
wobei eine Außenmantelfläche des Ventilkörpers (18) und eine Innenmantelfläche des äußeren Ventilbauteils (12) Durchgangsöffnungen (20) aufweisen, an welche Durchgangsöffnungen (20) Fluidleitungen (4, 5, 7, 8, 10) anschlie-ßen und
welche Durchgangsöffnungen (20) durch Drehen des Ventilkörpers (18) relativ zu dem äußeren Ventilbauteil (12) in und außer Überdeckung gebracht werden können,
einem Dichtungseinsatz (19) zwischen dem Ventilkörper (18) und dem äußeren Ventilbauteil (12) zum Abdichten von Durchgangsöffnungen (20), welcher Dichtungseinsatz (19) drehfest mit dem Ventilkörper (18) oder mit dem äußeren Ventilbauteil (12) verbunden ist und bei dem Drehen relativ zu dem jeweils anderen, also dem äußeren Ventilbauteil (12) bzw. dem Ventilkörper (18), mitgedreht wird und
welcher Dichtungseinsatz (19) mindestens eine der Durchgangsöffnungen (20) vollständig umläuft.

2. WC-Duscheinrichtung nach Anspruch 1, bei der mindestens zwei der Durchgangsöffnungen (20) entlang der Achse gegeneinander versetzt liegen und der Dichtungseinsatz (19) beide diese Durchgangsöffnungen (20) jeweils vollständig umläuft.

3. WC-Duscheinrichtung nach Anspruch 1 oder 2, bei der eine Fluidleitung in dem äußeren Ventilbauteil (12) stirnseitig an den Ventilkörper (18) angrenzt und der Ventilkörper (18) eine mit dieser Fluidleitung kommunizierende Durchgangsöffnung (26) an dieser Stirnseite sowie eine sich an die Durchgangsöffnung anschließende innere Fluidleitung (27) aufweist.

4. WC-Duscheinrichtung nach einem der vorstehenden Ansprüche, bei der eine Länge des Dichtungseinsatzes in der Richtung der Achse größer als senkrecht dazu ist.

5. WC-Duscheinrichtung nach einem der vorstehenden Ansprüche, bei der der Dichtungseinsatz in einer Umfangsrichtung um die Achse herum geschlossen ist.

6. WC-Duscheinrichtung nach einem der vorstehenden Ansprüche, bei der der Dichtungseinsatz ein Formschlusselement (22) zur Drehsicherung gegenüber dem Ventilkörper (18) bzw. dem äußeren Ventilbauteil (12) aufweist.

7. WC-Duscheinrichtung nach einem der vorstehenden Ansprüche, bei der der Dichtungseinsatz um zumindest eine der Durchgangsöffnungen (20) in einer der Mantelflächen herum eine die Durchgangsöffnung (20) vollständig umlaufende Verdickung (24) aufweist.

8. WC-Duscheinrichtung nach einem der vorstehenden Ansprüche, bei der der Dichtungseinsatz aus Silikon besteht, vorzugsweise mit einer Shore A-Härte zwischen 40 und 80.

9. WC-Duscheinrichtung nach einem der vorstehenden Ansprüche, bei der das äußere Ventilbauteil (12) und/oder der Ventilkörper (18) aus Kunststoff aufgebaut sind, insbesondere Spritzgussteile sind.

10. WC-Duscheinrichtung nach einem der vorstehenden Ansprüche mit einem Motor (9) zum Antreiben der Drehbewegung, welcher Motor (9) vorzugsweise stirnseitig mit dem Ventilkörper (18) gekoppelt ist.

11. WC-Duscheinrichtung nach einem der vorstehenden Ansprüche, bei der der Ventilkörper (18) an einer von einem Betätigungsangriff für die Drehbewegung beabstandeten Stelle, vorzugsweise an einem dazu entgegengesetzten Ende, ohne Zwischenschaltung des Dichtungseinsatzes (19) in dem äußeren Ventilbauteil (12) gelagert ist.

12. Verwendung eines Fluidverteilerventils (6) für eine WC-Duscheinrichtung nach einem der Ansprüche 1-11,
wobei das Fluidverteilerventil (6) ausgestattet ist mit
einem in dem äußeren Ventilbauteil (12) angeordneten und relativ zu dem äu-ßeren Ventilbauteil (12) um eine Achse drehbaren Ventilkörper (18),
wobei eine Außenmantelfläche des Ventilkörpers (18) und eine Innenmantelfläche des äußeren Ventilbauteils (12) Durchgangsöffnungen (20) aufweisen, an welche Durchgangsöffnungen (20) Fluidleitungen (4, 5, 7, 8, 10) anschlie-ßen und
welche Durchgangsöffnungen (20) durch Drehen des Ventilkörpers (18) relativ zu dem äußeren Ventilbauteil (12) in und außer Überdeckung gebracht werden können,
einem Dichtungseinsatz (19) zwischen dem Ventilkörper (18) und dem äußeren Ventilbauteil (12) zum Abdichten von Durchgangsöffnungen (20), welcher Dichtungseinsatz (19) drehfest mit dem Ventilkörper (18) oder mit dem äußeren Ventilbauteil (12) verbunden ist und bei dem Drehen relativ zu dem jeweils anderen, also dem äußeren Ventilbauteil (12) bzw. dem Ventilkörper (18), mitgedreht wird und
welcher Dichtungseinsatz (19) mindestens eine der Durchgangsöffnungen (20) vollständig umläuft.
